# EUROPEAN PATENT SPECIFICATION

(11) **EP 2 527 211 B1**
(45) Date of publication and mention of the grant of the patent: **22.01.2014**
(21) Application number: 11167431.3
(22) Date of filing: 25.05.2011
(51) Int. Cl.: B60R 21/38

(54) **Piston mechanism for a vehicle safety system**
Kolbenmechanismus für ein Fahrzeugsicherheitssystem
Mécanisme de piston pour système de sécurité de véhicule

(43) Date of publication of application: 28.11.2012
(73) Proprietor: Autoliv Development AB, 447 83 Vårgårda (SE)
(72) Inventor: Axelsson, Peter, 44730, Vargarda (SE)
(74) Representative: Beattie, Alex Thomas Stewart

(56) References cited:
- FR-A1- 2 920 840
- US-A1- 2005 264 036
- US-A1- 2009 152 899

## Description

This invention relates to a piston system, and in particular concerns a piston system for use with a vehicle safety system such as a bonnet or hood lifter.

It is known to provide a bonnet lifter to reduce the likelihood of injury to a pedestrian who is struck substantially head-on by a motor vehicle. Typically, when an impact is determined to be imminent, or occurring, by one or more of the vehicle sensors, the rear edge of the bonnet is lifted up, to increase the distance between the underside of the bonnet and the vehicle's engine block. This means that, if a pedestrian strikes the upper surface of the bonnet, the bonnet may crumple and deform to a significant degree, thus reducing the downward momentum of the pedestrian, before the underside of the bonnet comes into contact with the engine block.

If a bonnet lifter is not provided, the bonnet of a typical motor vehicle can only deform by a very small amount before the underside of the bonnet comes into contact with the engine block, which will not deform to any appreciable degree and will decelerate the pedestrian's downward movement very suddenly, potentially resulting in serious or fatal injuries.

Current bonnet lifters generally cause a pre-determined movement of the bonnet, from a starting position to a fixed finishing position, regardless of when or if a pedestrian or another object strikes the bonnet. However, once a pedestrian has struck a bonnet it is generally desirable for the upward motion of the bonnet to cease.

In addition, once a bonnet lifter has been activated the bonnet will typically obscure a significant portion of the driver's view of the road ahead, making it difficult or impossible for the vehicle to be driven to a garage or workshop safely or legally.

US2005/264036 discloses a hood elevation system for a vehicle, which includes an actuator configured to selectively move at least a portion of a vehicle hood between an elevated and a retracted position. The hood elevation system also includes a self-locking mechanism configured to allow movement of the hood between the elevated and retracted positions initiated by the actuator, but to resist retraction of the hood as a result of certain loads applied to the hood. The self-locking mechanism thus enables repeated elevation and retraction of the hood. In a preferred embodiment, the self-locking mechanism is configured to deform, thereby absorbing energy from an impact to the hood.

It is an object of the present invention to seek to address some or all of the above problems.

Accordingly, one aspect of the present invention provides a piston mechanism for a vehicle safety system comprising: a piston and associated drive mechanism for driving the piston in a driving direction; and a locking arrangement positioned around or adjacent the piston, the locking arrangement being fixed in place with respect to the drive mechanism and including a locking element, the locking element being moveable from a first position or orientation, in which the piston may move in the driving direction with respect to the locking arrangement in a substantially unimpeded manner, and a second position or orientation, in which movement of the piston in the driving direction with respect to the locking arrangement is impeded, wherein: a first biasing element is provided to bias the locking element into the second position or orientation; the locking element is initially in the second position or orientation, and driving of the piston in the driving direction by the drive mechanism moves the locking element into the first position or orientation; the locking element has an aperture formed therethrough, with the piston passing through the aperture; and in the first position or orientation, a longitudinal axis of the aperture is substantially aligned with the longitudinal axis of the piston, and in the second position or orientation, the longitudinal axis of the aperture is at an angle to the longitudinal axis of the piston, so that one or more inner edges of the aperture press against an external surface of the piston.

Advantageously, the piston mechanism comprises a housing located entirely or substantially around the piston.

Preferably, the locking element is located within the housing.

Conveniently, in the second position or orientation, a part of the locking element presses against the external surface of the piston.

Advantageously, movement of the piston in the driving direction, driven by a driving force below a threshold force, will not move the locking element into the first position or orientation, and the drive mechanism is adapted to drive the piston with a driving force which is at least greater than the threshold force.

Preferably, after driving of the piston by the drive mechanism has commenced, the first biasing element is operable to return the locking element to the second position or orientation if the motion of the piston with respect to the drive mechanism is halted by an external force.

Conveniently, after the piston has been driven in the drive direction by a distance with respect to the drive mechanism and the locking mechanism is in the second position or orientation, applying a return force to the piston, in a direction substantially opposite to the driving direction, will force the locking element against a release guide, thus forcing the locking element into the first position or orientation.

Advantageously, the locking element rotates to move between the first and second positions or orientations, and wherein the release guide is shaped so that, when the locking element is forced against the release guide, the locking element must rotate into the first position or orientation.

Preferably, the piston mechanism further comprises a retaining element which initially prevents the locking element from being forced against the release guide, but which may be removed or altered to allow the locking element to be forced against the release guide.

Conveniently, the retaining element initially holds at least a part of the locking mechanism in place.

Advantageously, the piston mechanism further comprises a second biasing element, which is operable to separate the locking element from the release guide.

In order that the present invention may be more readily understood, embodiments thereof will now be described, by way of example, with reference to the accompanying drawings, in which:
Figure 1 shows an exploded view of a locking arrangement embodying the present invention;
Figure 2 shows the assembled locking arrangement;
Figure 3 shows the assembled locking arrangement mounted with respect to a cylinder and piston; and
Figures 4 to 8 show stages of the locking arrangement in operation.

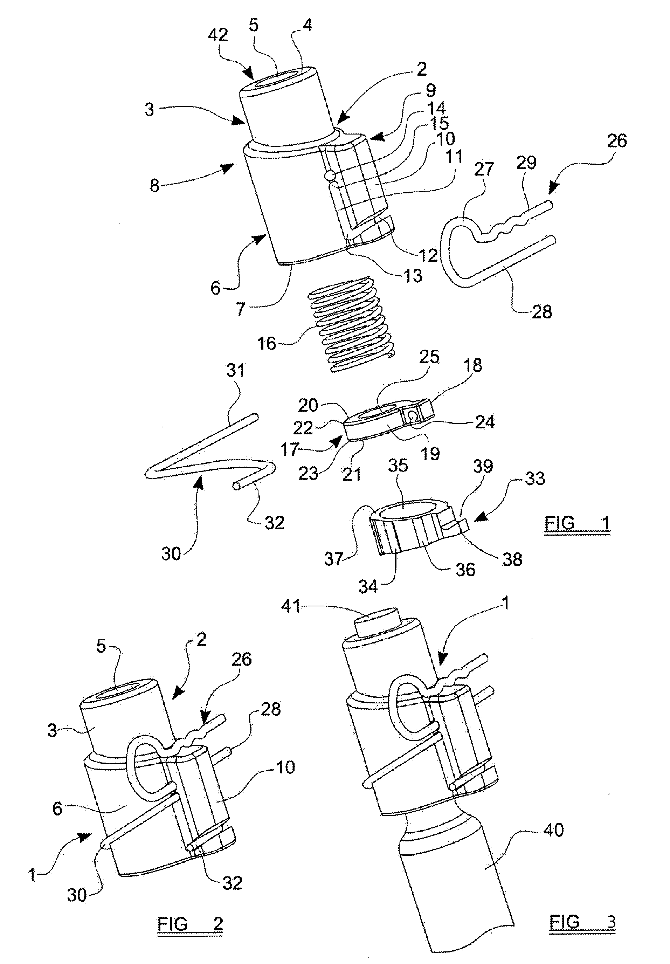

Referring firstly to figure 1, the components of a locking arrangement embodying the present invention are shown in an exploded view. Figure 2 shows the components when they are put together to form the assembled locking arrangement 1.

A housing 2 comprises an upper portion 3, which is generally hollow and cylindrical, having an inwardly-protruding lip 4 formed at its upper edge and surrounding an upper aperture 5, which is generally circular in shape. The lip 4 forms a generally planar upper surface 42 of the housing 2.

A lower portion 6 of the housing 2 is also generally cylindrical in shape and hollow, being of wider external and internal diameter than the upper portion 3. The lower surface 7 of the lower portion 6 is generally parallel with the upper surface 42.

Where the lower portion 6 meets the upper portion 3 there is an internal downwardly-facing shoulder, which separates the relatively narrow upper chamber formed within the upper portion 3 from the wider lower chamber which is formed within the lower portion 6. The interface between the upper and lower portions 3, 6 is formed to be at an angle with respect to the end surfaces 42, 7 of the housing 2, so that the shoulder is closer to the upper surface 42 of the housing 2 at a first side 8 of the housing 2, and is further from the upper surface 42 of the housing 2 on a second side 9 of the housing 2, which is generally opposite to the first side 8.

Preferably, this angle is around 10 degrees, although this is not critical and the invention will function with a range of suitable angles.

On the second side 9 of the housing 2 a projection 10 protrudes outwardly from the lower portion 6. The projection 10 extends substantially over the entire length of the lower portion 6 and is generally hollow, being in communication with the lower chamber. It will therefore be understood that the internal cross-sectional shape of the lower chamber will be generally round, with an extended portion on one side.

A first slot 11 is formed through the lower portion 6 of the housing 2 between the main, cylindrical part of the lower portion 6 and the projection 10. The first slot 11 passes all the way through the lower portion 6, and extends along most of the length of the projection 10, but does not reach the lower surface 7 of the lower portion 6, or the shoulder between the upper and lower portions 3,6.

A second slot 12 is formed between the lower end 13 of the first slot 11 and the outer surface of the projection 10. The first and second slots 11, 12 therefore together generally form an "L"-shape.

A further aperture 14 is also formed through the lower portion 6, through the line joining the main, cylindrical part of the lower portion 6 and the projection 10, just above the upper end 15 of the first slot 11.

A first spring 16 is provided. The first spring 16 is, in the embodiment shown, a coil-type spring. The first spring 16 may be inserted through the open lower surface 7 of the housing 2 and into the upper portion 3 of the housing 2, where it rests against the underside of the lip 4 formed at the top end 5 of the housing 2.

A locking element 17 is generally annular in shape, and has a protrusion 18 projecting from one side thereof. The locking element 17 is sized so that it may slide into the lower portion 6 of the housing 2 and be received therein in a relatively close fit, with the protrusion 18 being received in the internal space defined by the projection 10 of the lower portion 6 of the housing. The locking element 17 is too wide to pass the shoulder that separates the lower portion 6 from the upper portion 3 of the housing 2.

Where the side walls 19 of the locking element 17 meet the upper and lower surfaces 20, 21 thereof, chamfered edges 22, 23 are preferably provided.

A retaining aperture 24 is formed through the protrusion 18 of the locking element 17, in a direction that is substantially parallel with the plane of the annular shape of the locking element 17.

The main aperture 25 that is formed through the centre of the locking element 17 is generally circular in cross-section, but is formed to be at an angle to the side walls 19. As the main aperture 25 passes from the lower surface 21 to the upper surface 20, the main aperture 25 slants away from the protrusion 18. The angle of slant between the axis of the main aperture 25 and an axis that is perpendicular to the upper and lower surfaces 20, 21 of the locking element 17 is preferably substantially equal to the angle between the interface between the upper and lower portions 3, 6 of the housing and the upper and lower surfaces 42, 7 of the housing 2.

A release pin 26 is also provided, and generally takes the form of a hairpin. The release pin 26 is preferably formed from a single length of wire (preferably heavy-gauge wire) which is bent to form a loop 27 with two generally parallel legs 28, 29 extending from the loop 27. The lower leg 28 is preferably substantially straight, and is of a suitable size to fit through the further aperture 14 formed through the lower portion 6 of the housing 2, and also through the retaining aperture 24 formed through the protrusion 18 of the locking element 17.

During assembly of the locking arrangement 1, the first spring 16 is firstly inserted into the upper portion of the housing 2, as described above. The locking element 17 is then inserted into the open lower surface 7 of the housing 2, until the retaining aperture 24 is aligned with the further aperture 14 formed through the housing 2. The lower leg 28 of the release pin 26 is then inserted through the further aperture 14, and retaining aperture 24, thus securing the locking element 17 in place with respect to the housing 2.

A second spring 30 preferably comprises a single loop of wire, terminating at its ends in generally parallel upper and lower retaining bars 31, 32. The upper and lower retaining bars 31, 32 are spaced apart from one another, and the second spring 30 may be compressed to allow the bars 31, 32 to move towards, and touch, one another.

The second spring 30 is arranged so that the upper retaining bar 31 rests at the upper end 15 of the first slot 11, and the lower retaining bar 32 rests at the lower end 13 of the first slot 11, with the loop of the second spring 30 passing around the outer surface of the lower portion 6 of the housing 2.

The final component of the locking arrangement 1 is a release guide 33. The release guide has a generally cylindrical outer profile, with a plurality of outwardly-projecting ridges which co-operate with corresponding keyways (not shown) formed on the internal surface of the housing 2, to prevent rotation of the release guide 33 within the housing.

A central aperture 35 is formed through the release guide 33, the axis of the central aperture 35 being generally parallel with the axis of the release guide 33.

The lower surface 36 of the release guide 33 is generally perpendicular with the longitudinal axis of the release guide 33. The top surface 37 is inclined with respect to the lower surface 36, preferably by the same angle as the interface between the upper and lower portions 3, 6 of the housing 2. The release guide 33 therefore generally takes the form of a wedge with a bore formed therethrough.

The release guide 33 also has a projection 38 which protrudes from one side thereof, and forms a generally upward-facing trough 39.

In use, the release guide 33 is inserted into the lower surface 7 of the housing 2, and the trough 39 formed by its projection 38 generally aligns with the lower end 13 of the first slot 11 formed through the housing 2.

The assembled locking arrangement 1 is shown in figure 2. Figure 3 shows a cylinder 40 which has a piston 41 protruding from the top end thereof. The locking arrangement 1 is arranged around the piston 41, so that the piston 41 passes all the way through the housing, passing through the open lower surface 7 of the housing, the central aperture 35 of the release guide 33, the main aperture 25 of the locking element 17, through the middle of the first spring 16 and out of the upper aperture 5 formed through the upper surface 42 of the housing 2. The piston 41 may, for example, be the piston of a bonnet lifter.

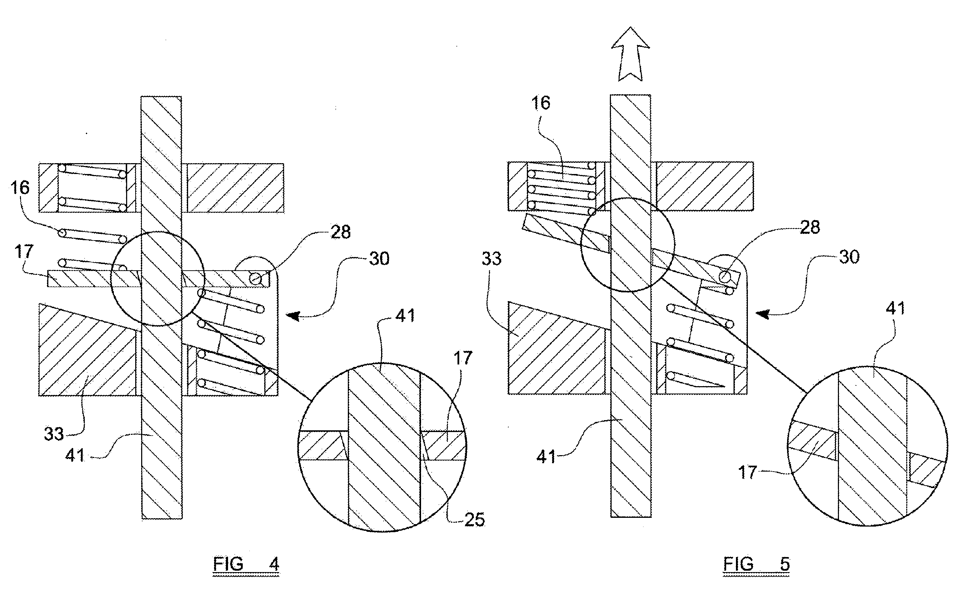

Figure 4 is a schematic cut-away view of the piston 41, locking element 17, release guide 33, first and second springs 16, 30 and the lower leg 28 of the release pin 26.

Although the first spring 16 extends all the way around the piston 41, the force exerted by the first spring 16 is primarily on the left-hand side of the locking element (in the orientation shown in figure 4), and the first spring 16 is therefore schematically shown as a compression spring located on the left-hand side of the piston 41 (i.e. the side opposite to the side on which the projection 10 protrudes from the housing 2).

Similarly, although the second spring 30 may include only a single coil, this spring 30 is schematically represented by a further compression spring located on the right-hand side of the piston 41 (i.e. the side on which the projection 10 protrudes from the housing 2).

The external diameter of the piston 41 is preferably only slightly smaller than the internal diameter of the main aperture 25 passing through the locking element 17. The region where the piston 41 passes through the main aperture 25 of the locking element 17 is enlarged in figure 4. It can be seen that, because the main aperture 25 is formed to be at an angle with the longitudinal axis of the locking element 17, the internal edges of the main aperture 25 are pressed firmly against the outer surface of the piston 41, thus holding the piston 41 in place with respect to the locking element 17.

As discussed above, the protrusion 18 of the locking element 17 is held in place with respect to the housing by the lower leg 28 of the release pin 26. The locking element 17 is therefore restrained only to pivoting around the axis defined by the lower leg 28 of the release pin 26. The first spring 16 presses down on the free end of the locking element 17 (i.e. the end of the left, in the orientation shown in figure 4) with sufficient force to prevent the locking element 17 from pivoting clockwise around this axis. The locking element 17 is therefore held in its initial position.

Figure 4 shows the initial configuration of the locking arrangement. It will be understood that, because the locking element 17 grips the piston 41 firmly, the piston is locked in place with respect to the locking arrangement 1.

When the bonnet lifter is activated, the piston 41 is driven upwardly by the pressure of gas in the cylinder 40. As the cylinder is driven upwardly, this will have the effect of lifting the locking element 17 in an upward direction. The locking element 17 will therefore pivot upwardly around the lower leg 28 of the release pin 26, compressing the first spring 16 in the process. As the locking element 17 is tilted, the axis of its main aperture 25 will completely or substantially align with that of the piston 41, so the piston 41 may slide easily through the main aperture 25. Once again, a close-up view of the region where the piston 41 passes through the central aperture of the locking element 17 is shown in figure 5.

The strength of the first spring 16 is chosen so that, as the piston 41 is driven upwardly by the pressure of gas in the cylinder 40, the locking element 17 remains in the "unlocked" position shown in figure 5, thus allowing the piston 41 to be driven upwardly with little or no resistance from the locking arrangement 1.

It will be understood that the piston 41 must be driven with at least a threshold force in order for the locking element 17 to be moved from the locked position to the unlocked position, as the biasing force of the first spring 16 must be overcome for this movement to take place. The cylinder/piston arrangement 40, 41 is chosen so that, when the bonnet lifter is activated, the piston 41 is driven with a force equal to or exceeding the threshold force.

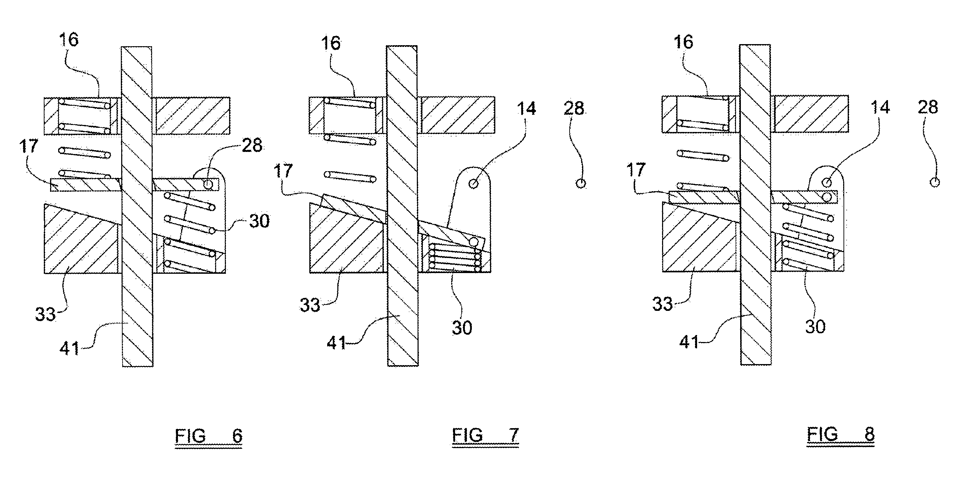

If the upward motion of the piston 41 is halted, for instance by the impact of a pedestrian on the bonnet that is being lifted by the piston 41, the lifting effect of the piston 41 on the locking element 17 will cease. The first spring 16 will then return the locking element 17 to its original "locked position", as shown in figure 6, and the piston 41 will once again be locked in position with respect to the housing 2.

It will therefore be understood that, when the upward motion of the piston 41 cease, the piston 41 will automatically lock in place, and will not continue to rise in an upward direction. Therefore, when a pedestrian strikes the bonnet of a vehicle, if the bonnet lifter has not fully completed its lifting operation, the bonnet will in any event stop at that point, and will not rise any further. This will help to avoid any injuries to a pedestrian that might arise from the bonnet continuing to move upwardly after the pedestrian has struck the bonnet. The piston will, however, be firmly locked against downward movement, and therefore the rear end of the bonnet will be held in place as the bonnet deforms to absorb the momentum of the pedestrian.

Once the bonnet lifter has been activated, it may be desired to return the bonnet to its original position, so that the view out of the vehicle's windscreen is not obscured, for instance to allow the vehicle to be driven to a workshop/garage for repairs to be carried out and/or for the bonnet lifter to be re-set.

In order to do this, the release pin 26 is firstly removed from the locking arrangement 1. This means that the locking element 17 is therefore free to "float" within the housing 2 and is not constrained to pivot around the retaining aperture 24 formed through its protrusion 18. The locking element 17 will, however, initially remain in its locked position due to the interaction of the first spring 16, which presses down on the left-hand side of the locking element 17 (in the orientation shown in the figures), and the second spring 30, which presses upwardly on the underside of the right-hand side of the locking element 17. The locking element 17 is therefore held in a position in which it is rotated counter-clockwise as far as possible, so the internal edges of the main aperture 25 of the locking element grip firmly against the outer surface of the piston 41.

If the piston 41 is then driven downwardly (for instance, by manually pressing on the upper end of the piston 41, or directly on the top surface of the bonnet), the effect will be to push the locking element 17 downwardly within the housing 2. As this occurs, the locking element 17 will be pushed down onto the upper surface of the release guide 33. Because of the inclined top surface 37 of the release guide 33, the locking element 17 will be forced into the "unlocked" orientation with respect to the piston 41, and the piston 41 may therefore be pushed downwardly by a sufficient amount that the bonnet does not obscure the view out of the vehicle's windscreen. When the piston 41 has been pushed down far enough, the piston may be released, and the first and second springs 16, 30 will then once again push the locking element 17 into the locked position, as shown in figure 8. Once the piston 41 has been pressed down, therefore, the locking arrangement 1 will lock the piston 41 in place once again and prevent the piston 41 from rising upwardly.

Whilst the above example has been explained in relation to a bonnet lifter, it will be understood that locking arrangements of this type may be used in other situations, and particularly in other vehicle safety systems, for instance in a rollover bar or a seat belt system. A skilled person will appreciate how the locking arrangement may be incorporated into systems such as this, to ensure that the piston is placed into a locked state when movement of the piston is halted at any point along its travel path, even if the normal motion of the piston has not been completed.

It will be appreciated that the present invention provides a robust and adaptable locking arrangement which will find utility in many situations, in particular in vehicle safety systems.

In the present specification "comprise" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A piston mechanism for a vehicle safety system comprising:
a piston (41) and associated drive mechanism (40) for driving the piston (41) in a driving direction; and
a locking arrangement positioned around or adjacent the piston (41), the locking arrangement being fixed in place with respect to the drive mechanism (40) and including a locking element (17), the locking element (17) being moveable from a first position or orientation, in which the piston (41) may move in the driving direction with respect to the locking arrangement in a substantially unimpeded manner, and a second position or orientation, in which movement of the piston (41) in the driving direction with respect to the locking arrangement is impeded, wherein:
a first biasing element (16) is provided to bias the locking element (17) into the second position or orientation;
the locking element (17) is initially in the second position or orientation, and driving of the piston (41) in the driving direction by the drive mechanism (40) moves the locking element (17) into the first position or orientation;
the locking element (17) has an aperture (25) formed therethrough, with the piston (41) passing through the aperture (25); and
in the first position or orientation, a longitudinal axis of the aperture (25) is substantially aligned with the longitudinal axis of the piston (41), and in the second position or orientation, the longitudinal axis of the aperture (25) is at an angle to the longitudinal axis of the piston (41), so that one or more inner edges of the aperture (25) press against an external surface of the piston (41).

2. A piston mechanism according to claim 1, comprising a housing (2) located entirely or substantially around the piston (41).

3. A piston mechanism according to claim 2, wherein the locking element (17) is located within the housing (2).

4. A piston mechanism according to any preceding claim wherein, in the second position or orientation, a part of the locking element (17) presses against the external surface of the piston (41).

5. A piston mechanism according to any preceding claim, wherein movement of the piston (41) in the driving direction, driven by a driving force below a threshold force, will not move the locking element (17) into the first position or orientation, and the drive mechanism (40) is adapted to drive the piston (41) with a driving force which is at least greater than the threshold force.

6. A piston mechanism according to any preceding claim, when dependent upon claim 5 wherein, after driving of the piston by the drive mechanism (40) has commenced, the first biasing element (16) is operable to return the locking element (17) to the second position or orientation if the motion of the piston (41) with respect to the drive mechanism (40) is halted by an external force.

7. A piston mechanism according to any preceding claim wherein, after the piston (41) has been driven in the drive direction by a distance with respect to the drive mechanism (40) and the locking mechanism is in the second position or orientation, applying a return force to the piston (41), in a direction substantially opposite to the driving direction, will force the locking element (17) against a release guide (33), thus forcing the locking element (17) into the first position or orientation.

8. A piston mechanism according to claim 7, wherein the locking element (17) rotates to move between the first and second positions or orientations, and wherein the release guide (33) is shaped so that, when the locking element (17) is forced against the release guide (33), the locking element (17) must rotate into the first position or orientation.

9. A piston mechanism according to claim 7 or 8, further comprising a retaining element (26) which initially prevents the locking element (17) from being forced against the release guide (33), but which may be removed or altered to allow the locking element (17) to be forced against the release guide (33).

10. A piston mechanism according to claim 9, wherein the retaining element (26) initially holds at least a part of the locking mechanism in place.

11. A piston mechanism according to one of claims 7 to 10 further comprising a second biasing element (30), which is operable to separate the locking element (17) from the release guide (33).

## Patentansprüche

1. Kolbenmechanismus für ein Fahrzeugsicherheitssystem, umfassend:
einen Kolben (41) und zugehörigen Antriebsmechanismus (40) zum Antreiben des Kolbens (41) in einer Antriebsrichtung; und
eine Feststellanordnung, die um oder angrenzend an den Kolben (41) platziert ist, wobei die Feststellanordnung bezogen auf den Antriebsmechanismus (40) an ihrem Platz fixiert ist und ein Feststellelement (17) aufweist, wobei das Feststellelement (17) aus einer ersten Stellung oder Ausrichtung, in der sich der Kolben (41) in der Antriebsrichtung bezogen auf die Feststellanordnung in einer im Wesentlichen ungehinderten Weise bewegen kann, und einer zweiten Stellung oder Ausrichtung bewegbar ist, in der die Bewegung des Kolbens (41) in der Antriebsrichtung bezogen auf die Feststellanordnung erschwert ist, wobei:
ein erstes Vorspannelement (16) vorgesehen ist, um das Feststellelement (17) in die zweite Stellung oder Ausrichtung vorzuspannen;
sich das Feststellelement (17) anfangs in der zweiten Stellung oder Ausrichtung befindet, und das Feststellelement (17) durch den Antrieb des Kolbens (41) in der Antriebsrichtung durch den Antriebsmechanismus (40) in die erste Stellung oder Ausrichtung bewegt wird;
das Feststellelement (17) eine dort hindurch ausgebildete Öffnung (25) aufweist, wobei der Kolben (41) durch die Öffnung (25) verläuft; und
in der ersten Stellung oder Ausrichtung eine Längsachse der Öffnung (25) im Wesentlichen nach der Längsachse des Kolbens (41) ausgerichtet ist, und in der zweiten Stellung oder Ausrichtung die Längsachse der Öffnung (25) einen Winkel zur Längsachse des Kolbens (41) aufweist, sodass ein oder mehrere Innenkanten der Öffnung (25) gegen eine Außenfläche des Kolbens (41) drücken.

2. Kolbenmechanismus nach Anspruch 1, der ein Gehäuse (2) umfasst, das vollständig oder im Wesentlichen um den Kolben (41) herum angeordnet ist.

3. Kolbenmechanismus nach Anspruch 2, wobei sich das Feststellelement (17) innerhalb des Gehäuses (2) befindet.

4. Kolbenmechanismus nach einem vorhergehenden Anspruch, wobei in der zweiten Stellung oder Ausrichtung ein Teil des Feststellelements (17) gegen die Außenfläche des Kolbens (41) drückt.

5. Kolbenmechanismus nach einem vorhergehenden Anspruch, wobei durch die Bewegung des Kolbens (41) in der Antriebsrichtung, angetrieben durch eine Antriebskraft unterhalb einer Schwellenkraft, das Feststellelement (17) nicht in die erste Stellung oder Ausrichtung bewegt wird, und der Antriebsmechanismus (40) so ausgelegt ist, dass er den Kolben (41) mit einer Antriebskraft antreibt, die zumindest größer als die Schwellenkraft ist.

6. Kolbenmechanismus nach einem vorhergehenden Anspruch, wenn er von Anspruch 5 abhängig ist, wobei nach dem Beginn des Antriebs des Kolbens durch den Antriebsmechanismus (40) das erste Vorspannelement (16) so einsetzbar ist, dass es das Feststellelement (17) in die zweite Stellung oder Ausrichtung zurückführt, wenn der Kolben (41) in seiner Bewegung bezogen auf den Antriebsmechanismus (40) durch eine äußere Kraft angehalten wird.

7. Kolbenmechanismus nach einem vorhergehenden Anspruch, wobei, nachdem der Kolben (41) in der Antriebsrichtung über eine Entfernung bezogen auf den Antriebsmechanismus (40) angetrieben wurde und sich der Feststellmechanismus in der zweiten Stellung oder Ausrichtung befindet, durch Ausüben einer Rückführkraft auf den Kolben (41) in einer Richtung im Wesentlichen entgegen der Antriebsrichtung das Feststellelement (17) gegen eine Freigabeführung (33) gedrückt und somit das Feststellelement (17) in die erste Stellung oder Ausrichtung gedrückt wird.

8. Kolbenmechanismus nach Anspruch 7, wobei sich das Feststellelement (17) dreht, um sich zwischen der ersten und zweiten Stellung oder Ausrichtung zu bewegen, und wobei die Freigabeführung (33) so geformt ist, dass wenn das Feststellelement (17) gegen die Freigabeführung (33) gedrückt wird, sich das Feststellelement (17) in die erste Stellung oder Ausrichtung drehen muss.

9. Kolbenmechanismus nach Anspruch 7 oder 8, der ferner ein Halteelement (26) umfasst, das anfangs verhindert, dass das Feststellelement (17) gegen die Freigabeführung (33) gedrückt wird, das jedoch entfernt oder verändert werden kann, um zu ermöglichen, dass das Feststellelement (17) gegen die Freigabeführung (33) gedrückt wird.

10. Kolbenmechanismus nach Anspruch 9, wobei das Halteelement (26) anfangs zumindest einen Teil des Feststellmechanismus an seinem Platz hält.

11. Kolbenmechanismus nach einem der Ansprüche 7 bis 10, der ferner ein zweites Vorspannelement (30) umfasst, das so einsetzbar ist, dass es das Feststellelement (17) von der Freigabeführung (33) ablöst.

## Revendications

1. Mécanisme de piston pour système de sécurité de véhicule, comprenant :
un piston (41) et mécanisme d'entraînement associé (40) pour entraîner le piston (41) dans une direction d'entraînement ; et
un agencement de blocage positionné autour du ou adjacent au piston (41), l'agencement de blocage étant fixé en place par rapport au mécanisme d'entraînement (40) et comportant un élément de blocage (17), l'élément de blocage (17) étant mobile d'une première position ou orientation, dans laquelle le piston (41) peut se déplacer dans la direction d'entraînement par rapport à l'agencement de blocage de manière essentiellement non entravée, et une seconde position ou orientation, dans laquelle le mouvement du piston (41) dans la direction d'entraînement par rapport à l'agencement de blocage est entravé, dans lequel :
un premier élément de précontrainte (16) est agencé pour précontraindre l'élément de blocage (17) dans la seconde position ou orientation ;
l'élément de blocage (17) est initialement dans la seconde position ou orientation, et l'entraînement du piston (41) dans la direction d'entraînement par le mécanisme d'entraînement (40) déplace l'élément de blocage (17) dans la première position ou orientation ;
l'élément de blocage (17) présente une ouverture (25) formée à travers celui-ci, le piston (41) passant à travers l'ouverture (25) ; et
dans la première position ou orientation, un axe longitudinal de l'ouverture (25) est essentiellement aligné avec l'axe longitudinal du piston (41), et dans la seconde position ou orientation, l'axe longitudinal de l'ouverture (25) est à un angle par rapport à l'axe longitudinal du piston (41), de sorte qu'un ou plusieurs bords intérieurs de l'ouverture (25) exercent une pression contre une surface extérieure du piston (41).

2. Mécanisme de piston selon la revendication 1, comprenant un boîtier (2) situé entièrement ou essentiellement autour du piston (41).

3. Mécanisme de piston selon la revendication 2, dans lequel l'élément de blocage (17) est situé à l'intérieur du boîtier (2).

4. Mécanisme de piston selon une quelconque revendication précédente, dans lequel, dans la seconde position ou orientation, une partie de l'élément de blocage (17) exerce une pression contre la surface extérieure du piston (41).

5. Mécanisme de piston selon une quelconque revendication précédente, dans lequel un mouvement du piston (41) dans la direction d'entraînement, entraîné par une force d'entraînement inférieure à une force seuil, ne déplacera pas l'élément de blocage (17) dans la première position ou orientation, et le mécanisme d'entraînement (40) est adapté pour entraîner le piston (41) avec une force d'entraînement qui est au moins supérieure à la force seuil.

6. Mécanisme de piston selon une quelconque revendication précédente, quand elle dépend de la revendication 5, dans lequel après que l'entraînement du piston par le mécanisme d'entraînement (40) a commencé, le premier élément de précontrainte (16) peut être actionné pour ramener l'élément de blocage (17) à la seconde position ou orientation si le mouvement du piston (41) par rapport au mécanisme d'entraînement (40) est arrêté par une force extérieure.

7. Mécanisme de piston selon une quelconque revendication précédente, dans lequel, après que le piston (41) a été entraîné dans la direction d'entraînement sur une distance par rapport au mécanisme d'entraînement (40) et que le mécanisme de blocage est dans la seconde position ou orientation, l'application d'une force de retour sur le piston (41) dans une direction essentiellement opposée à la direction d'entraînement poussera l'élément de blocage (17) contre un guide de déblocage (33), poussant ainsi l'élément de blocage (17) dans la première position ou orientation.

8. Mécanisme de piston selon la revendication 7, dans lequel l'élément de blocage (17) tourne pour se déplacer entre la première et la seconde position ou orientation, et dans lequel le guide de déblocage (33) est formé de sorte que, quand l'élément de blocage (17) est poussé contre le guide de déblocage (33), l'élément de blocage (17) doit tourner dans la première position ou orientation.

9. Mécanisme de piston selon la revendication 7 ou 8, comprenant en outre un élément de retenue (26) qui empêche initialement l'élément de blocage (17) d'être poussé contre le guide de déblocage (33), mais qui peut être retiré ou modifié pour permettre à l'élément de blocage (17) d'être poussé contre le guide de déblocage (33).

10. Mécanisme de piston selon la revendication 9, dans lequel l'élément de retenue (26) maintient initialement au moins une partie du mécanisme de blocage en place.

11. Mécanisme de piston selon l'une des revendications 7 à 10, comprenant en outre un second élément de précontrainte (30), qui peut être actionné pour séparer l'élément de blocage (17) du guide de déblocage (33).
